Europäisches Patentamt

European Patent Office

Office européen des brevets

(19)

(11) EP 0 835 718 A1

(12) EUROPEAN PATENT APPLICATION

(43) Date of publication:
15.04.1998 Bulletin 1998/16

(51) Int. Cl.⁶: B23K 37/053

(21) Application number: 97116957.8

(22) Date of filing: 30.09.1997

(84) Designated Contracting States:
AT BE CH DE DK ES FI FR GB GR IE IT LI LU MC
NL PT SE
Designated Extension States:
AL LT LV RO SI

(30) Priority: 08.10.1996 IT TO960818

(71) Applicant: P.W.T. S.p.A.
20124 Milano (IT)

(72) Inventors:
• Sacchi, Nicola
  27100 Pavia (IT)
• Rinaldi, Gianmario
  62024 Matelica (IT)

(74) Representative:
Modiano, Guido, Dr.-Ing. et al
Modiano & Associati S.r.l.
Via Meravigli, 16
20123 Milano (IT)

(54) **Improved coupling device for the orbital butt welding of medium and large metal pipes**

(57) The device comprises a set of expansion trucks (15a-15b) which can expand against the internal surface of the pipes for positioning, retaining and correcting the roundness of the ends of the pipes; fluid-driven cylinders (18a-18b) which act on corresponding sets of radial pins (20a-20b) for supporting the trucks; and transmission means (26a-26b) interposed between the fluid-driven cylinders (18a-18b) and the respective sets of radial pins (20a-20b) which are adapted to mechanically multiply the force applied by the cylinders to the pins.

FIG. 2

EP 0 835 718 A1

## Description

The present invention relates to coupling devices for the orbital butt welding of medium and large metal pipes.

Technicians in the field of orbital welding are acquainted with the fact that pipe segments to be butt-welded, for example in the construction of oil and gas pipelines and piping systems in general, are kept mutually in contact and centered by means of a coupling device which is arranged inside the two contiguous ends of juxtaposed pipes and has at least one, typically two, series of circumferential expansion trucks which can expand radially against the internal surfaces of the pipes to be welded.

These devices have several purposes: in particular, in addition to centering and retaining the pipes, they have the important additional function of correcting, by deforming the material of the pipes, any roundness errors of their circumference, which -- as is well-known -- cause small and modest but significant variations in the profile of the welding bevel, with severe and undesirable repercussions on the correct production of welding beads and especially on the so-called first-pass bead.

Owing to these reasons, in conventional coupling devices the expansion trucks are actuated by an actuation unit comprising at least one fluid-driven jack, typically two mutually opposite jacks, wherein the piston is arranged axially with respect to the coupling device and acts on a set of radial pins that support said trucks by means of respective direct kinematic transmissions constituted by simple link rods, each of which has one end articulated to the stem of said jack piston and the other end articulated to the radial supporting pin of the respective truck. With this conventional transmission, owing to the inclination of the articulated link rods, only part of the axial force applied by the piston of the jack is converted into a radial force on the set of radial pins that support the trucks, and this is a drawback which is currently felt increasingly because of the ever wider use of steels which have high-level mechanical characteristics to manufacture said metal pipes.

These steels in fact provide a significant increase in their yield point and therefore require considerably greater forces to correct by plastic deformation any out-of-round of said pipes.

With the conventional and above-specified expansion systems, the force applied to the expansion trucks can be raised by significantly increasing the useful cross-section of the piston of the fluid-driven jack, but this is constrained by the dimensions assumed by said jack; or, for an equal cross-section, by significantly increasing the pressure of the fluid fed into the cylinder of said jack, but this is equally and perhaps even more severely constrained both by safety reasons and by the strength of the fluid supply pipes, especially at the level of the unions and valves, and by the practical difficulty of having high-pressure motorized compressors at construction yards.

The aim of the present invention is essentially to eliminate these and other severe drawbacks of conventional devices, and the invention achieves this aim with an improved coupling device having the specific characteristics stated in the appended claims.

Substantially, the present invention is based on the concept of using, in order to transmit the force from the piston of the fluid-driven jack to the radial pins of the expansion trucks, transmission means which are adapted to multiply said force mechanically.

According to a preferred embodiment of the invention, corresponding first-class multiplier levers are interposed between said piston and said pins; each lever is pivoted to a fixed point of the structure of the coupling device and is articulated, by means of suitable end slots and corresponding cooperating pins, to the jack piston by means of a coupling flange at one end, and to the respective radial pin of the expandable truck at the other end.

It is evident that depending on the position of the fulcrum with respect to the two ends of each lever it is possible, with the improved system according to the invention, to mechanically multiply the force applied by the piston to each radial pin by the same ratio that relates the arms of each lever which are separated by the pivoting fulcrum.

The present invention is described in detail with reference to the accompanying drawings, which are given merely by way of non-limitative example and wherein:

figure 1 is a longitudinal sectional view of two adjacent pipe ends which include a conventional coupling device;
figure 2 is a partial longitudinal sectional view of the unit for actuating the expansion trucks of a coupling device of the kind shown in figure 1, illustrating the improved transmission mechanism according to the present invention;
figure 3 is an enlarged-scale view of a detail of figure 2, illustrating in detail a lever of the transmission mechanism of figure 2;

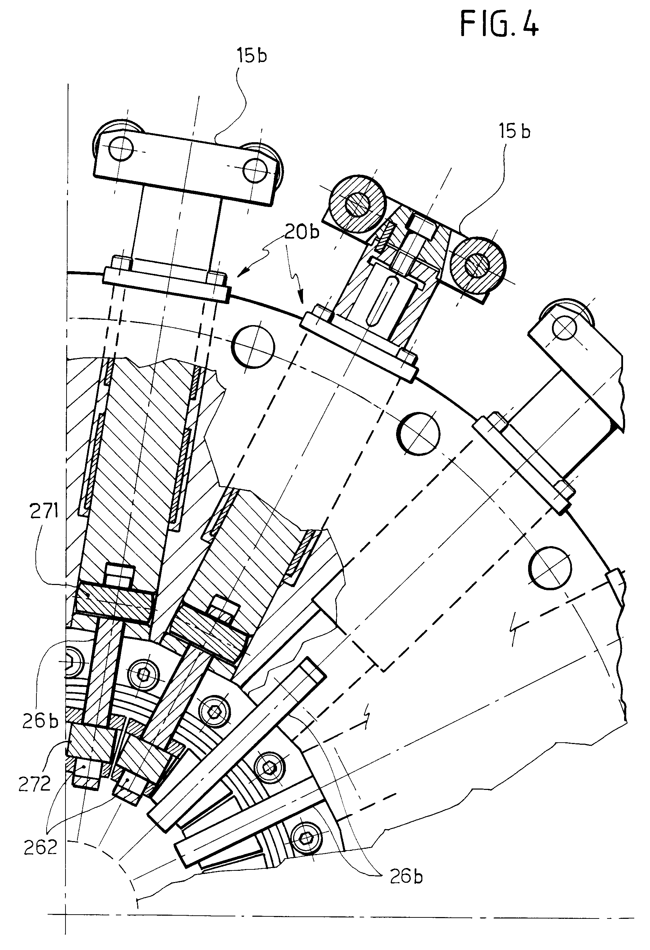

figure 4 is a partial exemplifying sectional view, taken along the multiple planes IV-IV of figure 3.

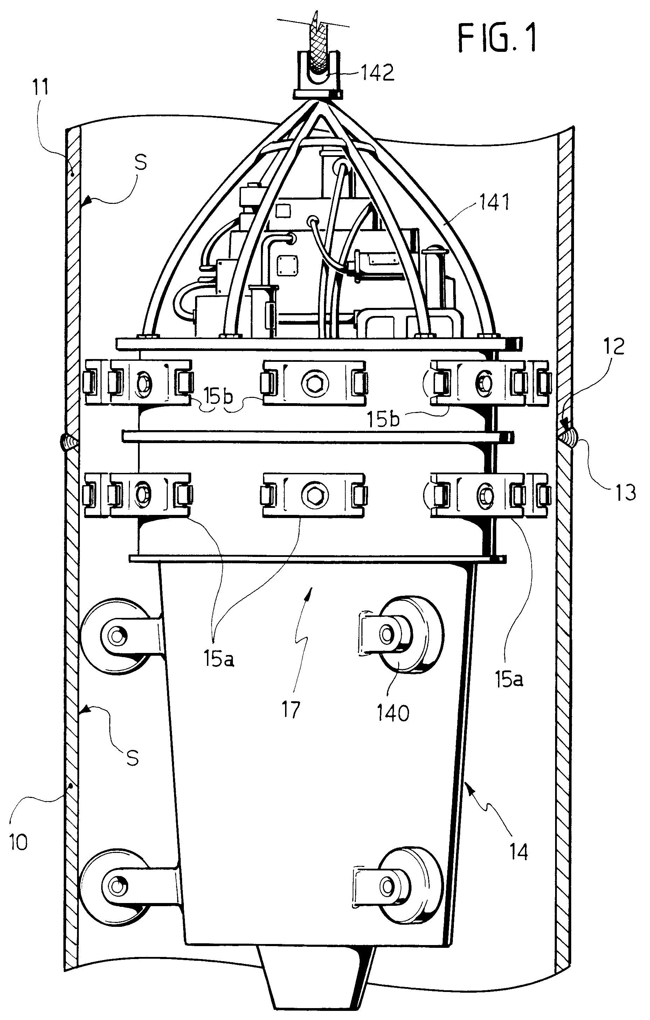

In figure 1, the reference numerals 10 and 11 designate two pipe segments to be butt welded; the reference numeral 12 designates the bevel provided on the ends of the pipes and the numeral 13 designates the welding bead deposited in multiple passes by one or more torches of an orbital welding apparatus known per se and not shown in the figure.

The two pipes internally accommodate a conventional coupling device, designated by the reference numeral 14, equipped with wheels 140 for moving and an end ogive 141 provided with an end eyelet 142 for engaging a pulling cable.

The coupling device 14 comprises a double set of circumferential expansion trucks 15a-15b which can expand radially respectively against the internal surface S of the pipe 10 and against the internal surface of the pipe 11 in order to center, retain and size said pipes.

For this purpose, there is provided a fluid-driven unit for moving said expansion trucks radially, which is accommodated inside the structure or frame of the coupling device 14 and is generally designated by the reference numeral 17.

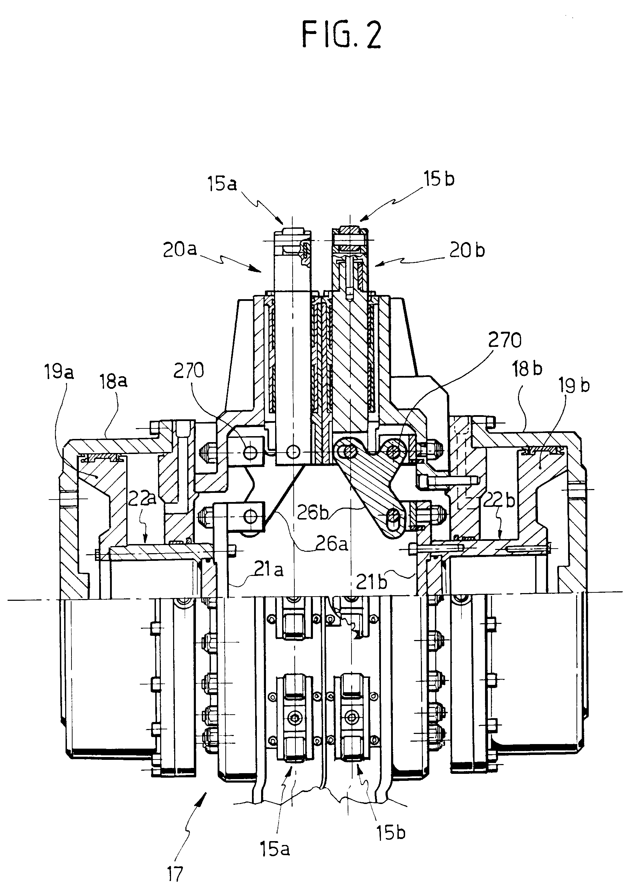

Said actuation unit 17 typically comprises (figure 2) two identical and mutually opposite fluid-driven cylinders 18a-18b arranged coaxially to the coupling device 14; each cylinder is provided with a respective piston 19a-19b which, through transmission means, acts on a corresponding set of radial pins 20a-20b for supporting the series of expansion trucks 15a and 15b respectively.

According to the present invention, said transmission means are improved so as to mechanically multiply the force that the individual pistons 19a-19b of the jacks transmit to the corresponding set of radial pins 20a-20b.

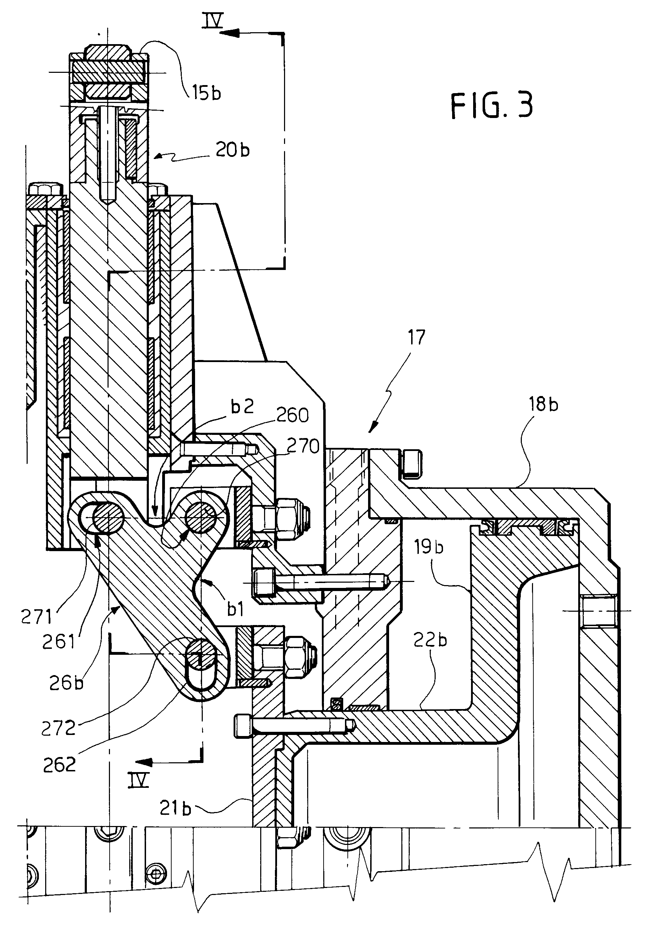

For this purpose, each piston is provided with a respective coupling flange 21a-21b which is connected, at its end, to corresponding piston stems 22a-22b which hermetically pass through the cylinders 18a-18b; each flange is connected to the set of corresponding radial pins 20a and 20b through respective pluralities of levers 26a-26b. Each lever 26, of the so-called first-class kind, is pivoted in an intermediate point 260 (figure 3) to a fixed pivot 270 which is rigidly coupled to the structure of the coupling device 14 and is articulated, through end slots 261-262 which allow said lever to oscillate and of respective cooperating pivots 271-272, to the coupling flange 21a-21b of the respective piston 19a-19b on one side and, on the other side, to the radial pin 20a-20b of the respective set of rigidly coupled radial pins.

Clearly, depending on the position of the axis of the intermediate fulcrum 260 with respect to the axis of the end slots 261 and 262 it is possible to mechanically multiply the force applied by each piston to the corresponding set of radial pins by the same ratio by which the lever arms b1, b2 shown in the figure are related.

In the illustrated example, which is of course non-limitative and wherein b1 = 1.5 b2 , the multiplication ratio is 1.5.

Of course, without altering the concept of the invention, the details of execution and the embodiments may be altered extensively with respect to what has been described and illustrated by way of non-limitative example without thereby abandoning the scope of the invention defined by the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A coupling device (14) for the orbital butt welding of medium and large metal pipes (10-11), comprising series of expansion trucks (15a-15b) which can expand against the internal surface of the pipes for positioning, retaining and correcting the out-of-round of the ends of said pipes, and fluid-driven cylinders (18a-18b) which act on corresponding sets of radial pins (20a-20b) for supporting said trucks; characterized in that it comprises transmission means (26a-26b) interposed between the fluid-driven cylinders (18a-18b) and the respective sets of radial pins (20a-20b) which are adapted to mechanically multiply the force applied by said cylinders to said pins.

2. A device according to claim 1, characterized in that said transmission means are constituted by respective pluralities of first-class levers (26a-26b), each of which is pivoted, in an intermediate point (260), to a fixed pivot (270) which is rigidly coupled to the structure of the coupling device (14) and is articulated, on one side, to the radial pin (20a-20b) that supports a respective expansion truck (15a-15b) and, on the other side, to the moving part (19a-19b; 21a-21b) of the corresponding fluid-driven cylinder (18a-18b).

3. A device according to claims 1 and 2, characterized in that each lever (26) has end slots (261-262) which cooperate with respective pins (271-272) which are supported by the radial pin (20a-20b) and by the moving part (19a-19b; 21a-21b) of the fluid-driven cylinder (20a-20b); said slots being adapted to allow the free oscillation of the lever about its own fulcrum (260).

4. A device according to the preceding claims, characterized in that the moving part of each fluid-driven cylinder (18a-18b) comprises a respective coupling plate (21a-21b) which is associated with the stem of the piston (19a-19b) of the cylinder and supports the articulation pivots (272) of the corresponding ends of the plurality of levers (26a-26b) interposed between said moving part and the respective set of radial pins (20a-20b) for supporting the expansion trucks.

FIG.1

# FIG. 2

FIG. 3

FIG.4

**European Patent Office**

**EUROPEAN SEARCH REPORT**

Application Number

EP 97 11 6957

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 193 812 A (CRC PIPELINE INTERNATIONAL INC.) | 1 | B23K37/053 |
| Y | * page 10, paragraph 2 - page 11, paragraph 1; figures 2,3 * | 2,3 | |
| Y | US 3 770 927 A (CHRISTOPH)<br>* column 6, paragraph 2; figure 2B * | 2 | |
| Y | DE 12 28 495 B (ROSORIUS)<br>* column 3, paragraph 3; figure 1 * | 3 | |
| A | US 3 387 761 A (PICKARD)<br>* the whole document * | 1-4 | |

TECHNICAL FIELDS
SEARCHED (Int.Cl.6)

B23K

The present search report has been drawn up for all claims

| Place of search | Date of completion of the search | Examiner |
|---|---|---|
| THE HAGUE | 13 January 1998 | Herbreteau, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)